Europäisches Patentamt

European Patent Office

Office européen des brevets

(11) Publication number: **0 073 151**
**B1**

# EUROPEAN PATENT SPECIFICATION

(45) Date of publication of patent specification: **22.04.87**

(51) Int. Cl.⁴: **B 29 C 49/08**, B 65 D 1/02

(21) Application number: **82304408.6**

(22) Date of filing: **20.08.82**

(54) **Method of moulding a blow-moulded bottle-shaped container.**

(30) Priority: **20.08.81 JP 123127/81 u**
**27.08.81 JP 134733/81**

(43) Date of publication of application:
**02.03.83 Bulletin 83/09**

(45) Publication of the grant of the patent:
**22.04.87 Bulletin 87/17**

(84) Designated Contracting States:
**CH DE FR GB IT LI NL**

(56) References cited:
EP-A-0 058 815
FR-A-2 285 978
FR-A-2 346 226
FR-A-2 401 759
FR-A-2 429 660
FR-A-2 447 326

PATENTS ABSTRACTS OF JAPAN, vol. 6, no.
69(M-125)(947), 30th April 1982

(73) Proprietor: **Yoshino Kogyosho CO., LTD.**
**No. 2-6, Ojima 3-chome, Koto-ku**
**Tokyo 136 (JP)**

(72) Inventor: **Hayashi, Yoshiaki**
**No. 3-2-6, Ojima**
**Koto-Ku Tokyo (JP)**
Inventor: **Takada, Takuzo**
**No. 3-2-6, Ojima Koto-ku**
**Tokyo (JP)**

(74) Representative: **Heath, Derek James et al**
**Bromhead & Co. 30 Cursitor Street Chancery**
**Lane**
**London EC4A 1LT (GB)**

Courier Press, Leamington Spa, England.

## Description

This invention relates to a method of moulding a hollow blow-moulded bottle-shaped container of a biaxially-orientated polyethylene terephthalate resin by injection moulding a piece or parison of primary preformed shape having a neck root-forming portion directly beneath a neck-forming portion, crystallizing a part of the piece or parison by a heat treatment, and then biaxial-orientation blow-moulding a body-forming portion of the piece or parison into a bottle-shaped container.

Blow-moulded bottle-shaped containers of a biaxially-orientated polyethylene terephthalate resin (hereinafter referred to as "PET") have a wide range of applications due to their excellent physical properties and characteristics, and two such containers are illustrated and described in DE—A1—29 50 233 and FR—A—2 429 660. As indicated in FR—A—2 429 660, some of the excellent physical properties of a bottle-shaped container made of PET are achieved after the bottle-shaped container has been biaxially-orientated and blow-moulded. Thus, the bottle-shaped container of PET in the said French specification is produced by injection-moulding a piece or parison as a primary or prefabricated moulded piece and then biaxially-orientating the primary piece or parison in a so-called blow-moulding method. However, the neck portion of the bottle-shaped container is not entirely orientated, with the result that the neck portion and the shoulder portion of the bottle-shaped container do not have the excellent physical properties of biaxially-orientated PET.

The drawbacks and disadvantages of these prior bottle-shaped containers where the neck portion and shoulder portion have not been subjected to, or have been insufficiently subjected to, an orientation are, for example, (a) a crazing of the material which occurs due to the impregnation of alcohol into the bottle-shaped container; (b) the possibility of various deformations and strains in the container including elongation due to a lack of sufficient hardness of the container; and (c) a low thermal resistance due to the occurrence of thermal deformation when a liquid at high temperature is poured into the bottle for the purpose of sterilization. More concretely, the application of high internal pressure to the bottle-shaped container (as in the case where a carbonated drink mixed with fruit juice is injected into the container by a hot charging process) causes the shoulder portion to be axially elongated and deformed by the internal pressure.

Accordingly, an aim of the present invention is to eliminate or at least reduce all the aforementioned drawbacks and disadvantages of conventional bottle-shaped containers made of PET with less deterioration in the physical properties of the neck portion and shoulder portion of the container.

With this aim in view, the invention is directed to a method as defined in the opening paragraph of the specification characterized in that the neck root-forming portion of the parison is downwardly and outwardly flared and is thinner than the body-forming portion, and that the outer peripheral part of the neck root-forming portion is crystallized by a heat treatment prior to the blow-moulding step.

Examples of the above method as illustrated by the accompanying drawings, in which:

Figure 1 is a partial longitudinal sectional view through an injection-moulded piece or parison before being biaxial-orientation blow-moulded to produce a hollow bottle-shaped container;

Figure 2 is a partial longitudinal sectional view of a bottle-shaped container blow-moulded according to the method of the present invention; and

Figure 3 is a partial longitudinal sectional view of a bottle-shaped container in which the portion from the neck root part to an intermediate part of the shoulder portion is crystallized according to the method of the present invention.

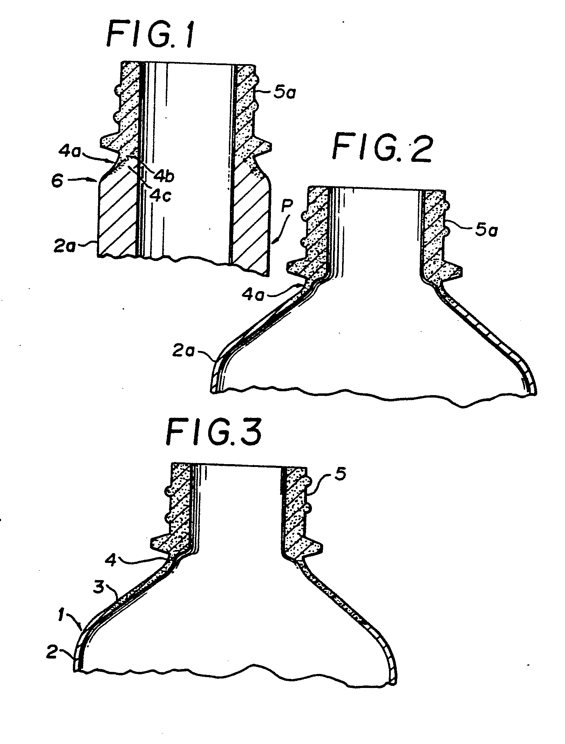

A method of moulding a hollow blow-moulded container of a biaxially-orientated polyethylene terephthalate according to the present invention comprises biaxial-orientation blow-moulding a piece or parison P which has been injection-moulded as a preformed primary moulded piece or parison into a bottle-shaped container 1. The piece or parison P is formed, as shown in Fig. 1, with a downwardly- and outwardly-flared neck root-forming portion 4a disposed directly under a neck-forming portion 5a in such a way that the thickness of the neck root-forming portion 4a is sufficiently smaller than that of the body-forming portion 2a.

The outer peripheral surface of the neck root-forming portion 4a thus formed in a downwardly-flared tapered shape has the same shape as the outer peripheral surface of the portion of the bottle-shaped container 1 to be produced by biaxial-orientation blow-moulding the piece or parison P and hence the neck root part 4 of the bottle-shaped container 1.

According to the method of the present invention, the piece or parison P thus formed is heat-treated over the entire area of the neck forming portion 5a and the outer peripheral surface of the neck root-forming portion 4a so as to be crystallized prior to the biaxial-orientation blow-moulding of the piece or parison P.

It should be noted in this case that the outer peripheral surface of the neck root-forming portion 4a which comprises a curved portion to be crystallized may not reach a boundary portion 6 between the outer peripheral surface of the neck root-forming portion 4a and the body-forming portion 2a. This is because the boundary portion 6 is a part not be be orientated and deformed.

After the entire area of the neck forming portion 5a and the outer peripheral surface 4b of the neck root-forming portion 4a are crystallized in this manner, the piece or parison P is heated to a temperature allowing an orientation effect for the piece or parison P and is then mounted via the neck forming portion 5a in a blowing mould so as to be biaxial-orientation blow-moulded into a bottle-shaped container 1.

The biaxial-orientation blow-moulding of the piece or parison P into a bottle-shaped container 1 is performed in the same manner as in conventional blow-moulding except that the outer peripheral surface of the neck root-forming portion 4a is crystallized and the thickness of the neck root-forming portion 4a is smaller than that of the body-forming portion 2a. More particularly, the orientating deformation of the piece or parison P is concentrated on the thinner portion of the piece or parison P to cause the thinner portion to be deformed to a predetermined elongation quantity much earlier. Therefore, when the piece or parison P is blow-moulded by biaxial orientation into a bottle-shaped container 1, the elongation deformation is concentrated at the neck root-forming portion 4a which has a reduced thickness at the initial time of the orientation blow-moulding.

However, since the outer peripheral surface of the neck root-forming portion 4a of the piece or parison P has already crystallized to become a part not to be orientation-deformed, only the inside portion 4c of the neck root-forming portion 4a which has not crystallized is orientation-deformed upon orientation-deforming of the body-forming portion 2a in such a way as to be moved to the body-forming portion 2a side, thereby forming substantially the shoulder portion 3 of the bottle-shaped container 1.

When the neck root-forming portion 4a of the piece or parison P is orientation-deformed in the blowing-mould, only the outer peripheral surface of the neck-forming portion 5a and the outer peripheral surface of the neck root-forming portion 4a, i.e., the portions already crystallized, are contacted by the blowing-mould. Thus, the other portions are not contacted by the blowing-mould. Therefore, the cooling effect from the blowing-mould at the initial time of the orientation-deforming does not substantially affect the portion not crystallized and, hence, the outer peripheral surface not crystallized of the neck root-forming portion 4a of the neck-forming portion 5a. In this way an extremely smooth orientation deformation of the neck root-forming portion 4a which is not crystallized is achieved.

In this manner, the neck root-forming portion 4a of the neck-forming portion 5a of the piece or parison P can be sufficiently orientation-deformed apart from the outer peripheral surface 4b not crystallized in the blow-moulding. Accordingly, as is evident from Fig. 2, the neck root 4 is formed substantially at the crystallized outer peripheral surface 4b of the neck-forming portion 4a in the orientation blow-moulding, the shoulder portion 3 integrally continued to the neck root 4 of the neck 5 is moulded at the already-crystallized outer peripheral surface of the neck root-forming portion 4a, and the shoulder portion 3 integrally continued to the neck root 4 is blow-moulded in such a manner that the not-crystallized inside portion 4c of the neck root-forming portion 4a is orientation blow-moulded. Therefore, the shoulder portion 3 integrally continued to the neck root 4 can be sufficiently orientated and can be formed in the thickness equivalent to the body portion 2 of the bottle-shaped container 1.

It will accordingly be seen that the bottle-shaped container 1 is blow-moulded by crystallizing the neck 5 forming a part of the bottle-shaped container with the neck root 4 being substantially not orientated nor deformed and with the shoulder portion 3 being now sufficiently orientation-deformed.

Fig. 3 shows a bottle-shaped container in which the portion from the neck root 4 to the intermediate part of the shoulder portion 3 is substantially crystallized according to the present invention. In order to blow-mould this bottle-shaped container according to the method of the present invention, the crystallization step performed at the neck root-forming portion 4a of the piece or parison P extends further to the boundary portion 6 as compared with the state shown in Fig. 1.

It will be appreciated from the foregoing description that, since the method of moulding the hollow blow-moulded bottle-shaped container of the present invention comprises crystallizing the neck 5, blow-moulding the parison into final shape without substantially entirely orientation-deforming the latter, blow-moulding the neck root 4 into final shape without substantially orientation-deforming it, and sufficiently orientation-deforming the shoulder portion 3, it can impart the effect of orientation equivalent to the body portion 2 to the shoulder portion 3 and can thus (a) prevent the crazing caused by alcohol in high density at the neck portion 5; (b) provide sufficient hardness to the bottle-shaped container, thereby allowing no apprehension of causing permanent deformation upon clamping of a cap on the neck portion; (c) improve the heat resistance of the bottle-shaped container; and (d) prevent deformation such as the elongation of the shoulder portion 3 due to high internal pressure.

**Claims**

1. A method of moulding a hollow blow-moulded bottle-shaped container of a biaxially-orientated polyethylene terephthalate resin by injection-moulding a parison (P) of primary preformed shape having a neck root-forming portion (4a) directly beneath a neck-forming portion (4a) directly beneath a neck-forming portion (5a), crystallizing a part of the piece or parison by a heat treatment, and then biaxial-orientation blow-moulding a body-forming portion (2a) of the piece or parison (P) into a bottle-shaped container, characterised in that the neck root-forming portion (4a) of the parison is downwardly and outwardly flared and is thinner than the body-forming portion (2a), and that the outer peripheral part (4b) of the neck root-forming portion (4a) is crystallised by a heat treatment prior to the blow-moulding step.

2. A method according to claim 1, characterised in that a shoulder-forming portion of the piece or parison (P) which is an integral continuation of the neck root-forming portion (4a) is orientated on the inside part of the neck root-forming portion (4a) at the time of the blow-moulding step.

3. A method according to claim 2, characterised in that the shoulder-forming portion has a thickness equivalent to that of the body-forming portion (2a).

## Patentansprüche

1. Verfahren zum Giessen eines hohlen, blasegeformten, flaschenförmigen Behälters aus biaxial orientiertem Polyethylenterephthalatharz durch Spritzgiessen eines Rohlings (P) einer primär vorgeformten Gestalt mit einem Halswurzel-Formabschnitt (4a) direkt unterhalb eines Hals-Formabschnittes (5a), durch Kristallisieren eines Teils des Rohlings durch eine Wärmebehandlung und dann durch biaxial orientiertes Blasformen eines Körperformabschnittes (2a), des Rohlings (P) in einen flaschenförmigen Behälter, dadurch gekennzeichnet, dass der Halswurzel-Formabschnitt (4a) des Rohlings nach unten und nach aussen sich erweitert und dünner ist als der Bodenformabschnitt (2a), und dass der äussere Umfangsteil (4b) des Halswurzel-Formabschnittes (4a) durch eine Wärmebehandlung vor dem Blasformen kristallisiert wird.

2. Verfahren nach Anspruch 1, dadurch gekennzeichnet, dass der Schulter-Formabschnitt des Rohlings (P), welcher Abschnitt eine integrale Forsetzung des Halswurzel-Formabschnittes (4a), ist, wird während des Blasformens am Innenteil des Halswurzel-Formabschnittes (4a) orientiert.

3. Verfahren nach Anspruch 2, dadurch gekennzeichnet, dass der Schulter-Formabschnitt eine Dicke hat, die der des Körperformabschnittes (2a) äquivalent ist.

## Revendications

1. Procédé de moulage d'un récipient en forme de bouteille creuse moulée par soufflage, en résine du type téréphtalate de polyéthylène à orientation biaxiale, par moulage par injection d'une ébauche (P) de profil préformé primaire ayant une partie (4a) de formation de pied de col directement au-dessous d'une partie (5a) de formation de col, cristallisation d'une partie de la pièce ou ébauche par traitement thermique, puis moulage par soufflage avec orientation biaxiale d'une partie (2a) de formation de corps de la pièce ou ébauche (P) pour donner un récipient en forme de bouteille, caractérisé en ce que la partie (4a) de formation de pied de col de l'ébauche est évasée vers le bas et vers l'extérieur et est plus mince que la partie (2a) de formation de corps, et en ce que la portion périphérique extérieure (4b) de la partie (4a) de formation de pied de col est cristallisée par un traitement thermique avant l'étape de moulage par soufflage.

2. Procédé selon la revendication 1, caractérisé en ce qu'une partie de formation d'épaule de la pièce ou ébauche (P), qui est un prolongement intégré de la partie (4a) de formation de pied de col, est orientée sur la portion intérieure de la partie (4a) de formation de pied de col au moment de l'étape de moulage par soufflage.

3. Procédé selon la revendication 2, caractérisé en ce que la partie de formation d'épaule présente une épaisseur équivalente à celle de la partie (2a) de formation de corps.

## FIG.1

## FIG.2

## FIG.3